# NEUE EUROPÄISCHE PATENTSCHRIFT

(11) **EP 0 847 342 B2**
(45) Veröffentlichungstag und Bekanntmachung des Hinweises auf die Entscheidung über den Einspruch: **27.06.2007**
(45) Hinweis auf die Patenterteilung: 24.03.1999
(21) Anmeldenummer: 96918608.9
(22) Anmeldetag: 25.06.1996
(51) Int. Cl.: B60R 16/02

(54) **ANORDNUNG ZUM KONTAKTLOSEN ÜBERTRAGEN VON SIGNALEN ZWISCHEN ZWEI GEGENEINANDER DREHBAR GELAGERTEN FAHRZEUGTEILEN**
DEVICE FOR THE CONTACTLESS TRANSFER OF SIGNALS BETWEEN TWO VEHICLE PARTS MOUNTED TO ROTATE WITH RESPECT TO EACH OTHER
DISPOSITIF DE TRANSFERT SANS CONTACT DE SIGNAUX ENTRE DEUX PARTIES DE VEHICULES MONTEES DE MANIERE A POUVOIR TOURNER L'UNE PAR RAPPORT A L'AUTRE

(30) Priorität: 01.09.1995 DE 19532296
(43) Veröffentlichungstag der Anmeldung: 17.06.1998
(73) Patentinhaber: ROBERT BOSCH GMBH, 70442 Stuttgart (DE)
(72) Erfinder: DOBLER, Klaus, D-70839 Gerlingen (DE); ZABLER, Erich, D-76297 Stutensee (DE); DUKART, Anton, D-76744 Wörth (DE); HERRMANN, Thomas, D-74243 Langenbrettach (DE)
(86) Internationale Anmeldenummer: PCT/DE1996/001115
(87) Internationale Veröffentlichungsnummer: WO 1997/009201

(56) Entgegenhaltungen:
- EP-A- 0 087 138
- EP-A- 0 183 580
- EP-A- 0 474 298
- EP-A- 0 520 535
- DE-A- 1 800 455
- DE-A- 3 117 478
- DE-A- 4 404 816
- US-A- 4 766 326
- US-A- 5 359 312

## Beschreibung

### Stand der Technik

Die vorliegende Erfindung betrifft eine Anordnung zum kontaktlosen Übertragen von Signalen zwischen zwei gegeneinander drehbar gelagerten Fahrzeugteilen -vorzugsweise zwischen einem mit einem Airbag ausgestatten Lenkrad und einer am Chassis angeordneten Steuerschaltung-, welche Anordnung aus einem Übertrager besteht, dessen Primär- und Sekundärwicklung in getrennten, um die Drehachse der Fahrzeugteile gegeneinander verdrehbaren ringförmigen Schalenkernen liegen, von denen einer einen U-förmigen Querschnitt aufweist.

Zur Zündung und Diagnose des im Lenkrad eines Fahrzeuges angeordneten Airbag (Fahrer-Airbag) wird eine Anordnung benötigt, die unabhängig von der Lenkradstellung eine einwandfreie Signalübertragung zwischen dem Zündsystem des Airbag im Lenkrad und einem außerhalb des Lenkrades angeordneten Steuergerätes ermöglicht. Es war üblich, diese Signalübertragung mittels Schleifringen oder Wickelfedern zu realisieren. Wie bereits aus der DE 38 12 633 A1 hervorgeht, beeinträchtigen solche mechanischen Kontakteinrichtungen die Lenkradbewegung. Außerdem gewährleisten sie nicht immer eine einwandfreie Funktion, insbesondere verfälschen sie aufgrund relativ hoher Widerstandsschwankungen die Diagnose des Zündsystems. Der Widerstand einer Zündkapsel für den Airbag hat üblicherweise einen sehr geringen Widerstand von ca. 2 Ohm. Für die Diagnose des Airbag wird dieser Widerstand stetig wiederkehrend gemessen, und es wird dem Fahrer über eine Warnlampe eine Fehlermeldung mitgeteilt, wenn der gemessene Widerstand dem tatsächlichen Widerstand der Zündkapsel um eine vorgegebene Schwelle nach oben oder nach unten unterschreitet. Um eine zuverlässige Diagnose durchführen zu können, muß eine Messung des Widerstandes der Zündkapsel mit sehr hoher Genauigkeit gewährleistet werden; das heißt das System für die Signalübertragung vom Airbag zum Steuergerät darf, gemessen am Widerstand der Zündkapsel, nur sehr geringe Widerstandsschwankungen aufweisen. Gemäß der DE 28 12 633 A1 und der DE-OS 24 33 555 wird anstelle von Schleifringen oder Wikkelfedern ein Übertrager zwischen Lenkrad und Lenksäule eingefügt, dessen Primär- und Sekundärwicklung gegeneinander um die Lenkradachse verdrehbar gelagert sind. Der DE-OS 24 33 555 ist ein Übertrager zu entnehmen, dessen Primär- und Sekundärwicklung in getrennten Schalenkernen, die koaxial zueinander verdrehbar angeordnet sind, liegen. Dieser bekannte Übertrager läßt noch eine relativ hohe Streuung des magnetischen Flusses zwischen der Primär- und der Sekundärwicklung zu, wodurch die Kopplung zwischen beiden Wicklungen nicht sehr eng ist und darunter die Meßgenauigkeit des Zündkapsel-Wider-standes leidet.

Aus der EP 0 520 535 A ist ein Übertrager der eingangs genannten Art bekannt, bei dem die Primär- und die Sekundärwicklung jeweils in einem U-förmigen Schalenkern liegen. Die beiden U-förmigen Schalenkerne sind in Richtung der Drehachse übereinander angeordnet. Dabei stehen sich die Stirnseiten der Schenkel der U-förmigen Schalenkerne gegenüber. Dadurch schneidet der magnetische Fluß durch die beiden Schalenkerne die zwischen den Stirnseiten der Schenkel bestehenden Luftspalten in Richtung der Drehachse. Ein gegenseitiger axialer Versatz der beiden Schalenkerne würde den Luftspalt verändern, was sich auf die magnetische Kopplung zwischen den beiden Wicklungen des Übertragers sehr stark auswirkt und dementsprechend einen Einfluß auf die Meßgenauigkeit des Zündkapsel-Widerstandes hat.

Aus DE 44 04 816 A1 ist es bekannt, dass ein eine zweite Wicklung tragender Ring in einen U-förmigen Schalenkern eintaucht, der eine Wicklung trägt. Dieser Ring bildet zusammen mit den Schenkeln des U-förmigen Schalenkerns eine relativ geringe Kopplung zwischen den beiden Wicklungen. Aus EP 087 138 A sind zwei U-förmige Schalenkerne bekannt, die Wicklungen aufweisen, wobei die Schalenkerne so angeordnet sind, dass zwei Schenkel der U-förmigen Schalenkerne sich stirnseitig gegenüberstehen. Damit verläuft der magnetische Fluss in axialer Richtung zur Drehachse. Nachteilig daran ist, dass bei einem axialen Versatz der beiden Schalenkerne sich die magnetische Kopplung durch eine Vergrößerung des Luftspalts in ungewollter Weise verändert.

Der Erfindung liegt daher die Aufgabe zugrunde, einen Übertrager der eingangs genannten Art anzugeben, der eine Messung des Widerstandes der Zündkapsel des Airbag mit möglichst hoher Genauigkeit ermöglicht.

### Vorteile der Erfindung

Die genannte Aufgabe wird erfindungsgemäß durch die Merkmale des Anspruchs 1 gelöst. Danach taucht ein Schalenkern einer Wicklung in den Schalenkern der anderen Wicklung ein, wodurch eine sehr enge Kopplung zwischen beiden Wicklungen entsteht. Außerdem sind die Schalenkerne so geformt, daß die zwischen ihnen bestehenden Luftspalte vom magnetischen Fluß vorzugsweise in radialer Richtung zur Lenkradachse geschnitten werden. Letzteres Merkmal bewirkt, daß die Widerstandsmessungen gegenüber einem axialen Versatz beider Wicklungen weitgehend unabhängig sind. Da der Sitz des Lenkrades auf der Lenksäule sich auf den Versatz zwischen den beiden Wicklungen auswirkt, dieser aber unkritisch ist, brauchen bei der Montage des Lenkrades keine sehr hohen Toleranzen eingehalten zu werden. Der Aufbau des erfindungsgemäßen Übertragers läßt also eine zuverlässige und Störungsunempfindliche Messung des Zündkapsel-Widerstandes zu.

Vorteilhafte Weiterbildungen der Erfindung gehen aus den Unteransprüchen hervor. Danach macht eine konische Form der Luftspalte zwischen den Schalenkernen die Meßgenauigkeit des Übertragers noch unempfindlicher gegenüber einem axialen Versatz der beiden Wicklungen.

Da in den Schalenkernen, zumindest wenn sie aus Eisen bestehen, Wirbelströme auftreten, welche die Kopplung zwischen den beiden Wicklungen verschlechtern und außerdem temperaturabhängig machen, wird das Meßergebnis verfälscht. Deshalb ist es zweckmäßig, die Entstehung von Wirbelströmen dadurch zu hemmen, daß Einschnitte in den Schalenkernen vorgesehen werden, welche die Stromwege vergrößern, oder die Schalenkerne aus gegeneinander isolierten Einzelsegmenten gefertigt werden. Auch ausgewählte Materialien, wie z. B. Ferrit, kunststoffgebundenes Ferritpulver oder kunststoffgebundenes Reineisen oder Nickel-Eisen-Pulver, bewirken eine noch stärkere Verringerung der Wirbelströme auf nahezu Null.

### Beschreibung der Ausführungsbeispiele

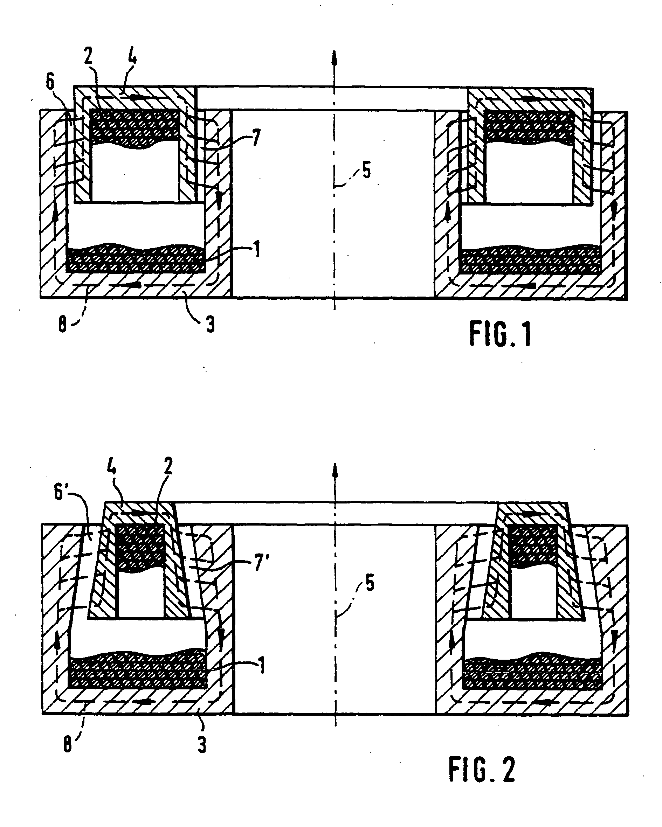

Anhand zweier in der Zeichnung dargestellter Ausführungsbeispiele wird nachfolgend die Erfindung näher erläutert. Es zeigen Figur 1 einen Übertrager mit parallel zur Lenkradachse verlaufenden Luftspalten und Figur 2 einen mit schräg zur Lenkradachse verlaufenden Luftspalten.

In der Figur 1 ist ein Querschnitt durch einen ringförmigen Übertrager dargestellt mit einer Primärwicklung 1 und einer Sekundärwicklung 2. Die Primärwicklung 1 ist in einem Schalenkern 3 mit U-förmigem Querschnittsprofil und die Sekundärwicklung 2 in einem hier ebenfalls U-förmigen Schalenkern 4 untergebracht. Der Schalenkern 4 der Sekundärwicklung 2 ragt in den anderen U-förmigen Schalenkern 3 hinein. Beide Schalenkerne 3 und 4 sind um die zentrale Achse 5 gegeneinander verdrehbar gelagert. Der Schalenkern 4 hat die Funktion eines Rotors und ist mit einem Lenkrad verbunden, und der Schalenkern 3 ist als Stator an einer feststehenden Lenksäule fixiert (Lenkrad und Lenksäule sind in der Zeichnung nicht dargestellt). Die Rotationsachse 5 des Übertragers fällt mit der Lenkradachse zusammen. Natürlich kann bei den Schalenkernen 3 und 4 die Funktion von Stator und Rotor auch vertauscht sein.

Bei dem in der Figur 1 dargestellten Ausführungsbeispiel sind die Schalenkerne 3 und 4 so geformt, daß die zwischen ihnen bestehenden Luftspalte 6 und 7 parallel zur Lenkradachse 5 orientiert sind. Wie durch die strichlierte Linie 8 angedeutet, wird der magnetische Fluß durch die Schenkel der Schalenkerne 3 und 4 konzentriert um die Wicklungen 1 und 2 geführt, so daß Streuflüsse, die die Kopplung zwischen den Wicklungen 1 und 2 verringern könnten, auf ein Minimum reduziert werden. Der magnetische Fluß 8 wird außerdem so geführt, daß er die Luftspalte 6 und 7 in radialer Richtung zur Lenkradachse 5 schneidet. Wegen dieses Verlaufs ist die Auswirkung eines axialen Versatzes zwischen den beiden Schalenkernen 3 und 4 auf den magnetischen Fluß 8 äußerst gering. Die Messung des Widerstandes der an die Sekundärwicklung 2 angeschlossenen Zündkapsel erfährt deshalb nahezu keine Verfälschung, wenn es zu einem axialen Versatz (bezüglich Achse 5) zwischen den beiden Schalerikernen 3 und 4 kommt. Eine relativ große axiale Montagetoleranz für das Lenkrad bis zu 3 mm wird sich daher nur sehr geringfügig auf das Meßergebnis des Zündkapsel-Widerstandes auswirken.

Der Einfluß einer axialen Verschiebung zwischen den beiden Schalenkernen 3 und 4 auf das Meßergebnis des Zündkapsel-Widerstandes kann durch das in Figur 2 dargestellte Ausführungsbeispiel eines Übertragers nahezu vollständig kompensiert werden.

Anders als beim Ausführungsbeispiel der Figur 1 sind beim Übertrager der Figur 2 die Schenkel der U-förmigen Schalenkerne 3 und 4 so konisch geformt, daß die Luftspalte 6' und 7' zwischen beiden in Richtung der Öffnung des U-förmigen Schalenkerns 3 zueinander hin geneigt sind. Wird nun der axiale Versatz zwischen den beiden Schalenkernen 3 und 4 vergrößert, so verringert sich automatisch die Breite der beiden Luftspalte 6' und 7', und somit nimmt die effektive Permeabilität des aus den Schalenkernen 3 und 4 gebildeten magnetischen Kreises zu. Diese Permeabilitätszunahme vergrößert die Kopplung zwischen den beiden Wicklungen 1 und 2 und wirkt der durch die Vergrößerung des axialen Versatzes zwischen den beiden Wicklungen hervorgerufenen Verschlechterung der Kopplung entgegen.

In den Schalenkernen 3 und 4 bilden sich erhebliche Wirbelströme aus, wenn ihr Material eine Leitfähigkeit > 10 000 S/m (z.B. bei Eisen) hat. Diese Wirbelströme, welch auch noch temperaturabhängig sind, hemmen den magnetischen Fluß und verschlechtern somit die Kopplung zwischen den beiden Wicklungen 1 und 2 und machen eine genaue Diagnose des Zündkapselwiderstandes unmöglich. Die Wirbelströme können dadurch verringert werden, daß die Schalenkerne 3 und 4 mit Einschnitten (in der Zeichnung nicht dargestellt) versehen werden, welche den Weg für die Wirbelströme verlängern, wodurch sich der Widerstand für die Wirbelströme erhöht. Die Wirbelströme lassen sich noch effektiver reduzieren, indem die Schalenkerne 3 und 4 aus Segmenten zusammengesetzt werden, die gegeneinander elektrisch isoliert sind. Am effektivsten lassen sich Wirbelströme dadurch vermeiden, daß Materialien mit einer geringen Leitfähigkeit < 500 S/m und einer relativen Permeabilität > 200 für die Schalenkerne 3 und 4 verwendet werden. Diese Materialeigenschaft besitzen z. B. Ferrite oder kunststoffgebundenes Eisen- bzw. Ferritpulver oder Eisen-Nickel Legierungen. Der Kunststoff dient dazu, kleinste Metallpartikel elektrisch isolierend zu umhüllen, so daß ein hoher Füllungsgrad bezüglich des ferromagnetischen Metalls entsteht. Ein weterer Vorteil von diesen pulverförmigen Materialien ist, daß sich auch komplizierte Geometrien relativ einfach im Preß- oder Spritzgußverfahren kostengünstig herstellen lassen und man somit vollkommen auf spanabhebende Bearbeitung verzichten kann. Durch eine thermische Nachbehandlung kann die Festigkeit der Formkörper erhöht werden. Durch die Verwendung von dem Material Nickel-Eisen (Ni50 - Fe50) kann mit einer relativen Permeabilität > 1 000 das Übertragungsverhalten noch weiter verbessert werden.

## Patentansprüche

1. Anordnung zum kontaktlosen Übertragen von Signalen zwischen zwei gegeneinander drehbar gelagerten Fahrzeugteilen - vorzugsweise zwischen einem mit einem Airbag ausgestatteten Lenkrad und einer am Chassis angeordneten Steuerschaltung -, welche Anordnung aus einem Übertrager besteht, dessen Primär- (1) und Sekundärwicklung (2) in getrennten, um die Drehachse (5) der Fahrzeugteile gegeneinander verdrehbaren ringförmigen Schalenkernen (3, 4) liegen, von denen einer (3) einen Ü-förmigen Querschnitt aufweist, **dadurch gekennzeichnet, dass** auch der zweite Schalenkern (4) einen U-förmigen Querschnitt aufweist, und dass dieser zweite U-förmige Schalenkern (4) in den ersten U-förmigen Schalenkern (3) hineinragt, so dass der magnetische Fluß (8) die zwischen beiden Schalenkernen (3, 4) verbleibenden Luftspalte (6, 7, 6', 7') vorzugsweise in radialer Richtung zur Drehachse (5) schneidet.

2. Anordnung nach Anspruch 1, **dadurch gekennzeichnet, daß** die Innenkontur des U-förmigen Schalenkerns (3) und die Außenkontur des darin hineinragenden Schalenkerns (4) so geformt sind, daß die zwischen beiden Schalenkernen (3, 4) vorhandenen Luftspalte (6, 7) achsparallel zueinander orientiert sind.

3. Anordnung nach Anspruch 1, **dadurch gekennzeichnet, daß** die Innenkontur des U-förmigen Schalenkerns (3) und die Außenkontur des darin hineinragenden Schalenkerns (4) konisch geformt sind, so daß die zwischen beiden Schalenkernen (3, 4) vorhandenen Luftspalte (6', 7') in Richtung der Öffnung des U-förmigen Schalenkerns (3) zueinander hin geneigt sind.

4. Anordnung nach Anspruch 1, **dadurch gekennzeichnet, daß** einer oder beide Schalenkerne (3, 4) dort, wo Wirbelströme auftreten, mit Einschnitten versehen sind, die so verlaufen, daß sich die Stromwege verlängern.

5. Anordnung nach Anspruch 1, **dadurch gekennzeichnet, daß** einer oder beide Schalenkerne (3, 4) in Bereichen, die von Wirbelströmen durchflossen werden, aus Segmenten zusammengesetzt sind, welche gegeneinander elektrisch isoliert sind.

6. Anordnung nach einem der vorhergehenden Ansprüche, **dadurch gekennzeichnet, daß** die Schalenkerne (3, 4) aus kunststoffgebundenem Eisenpulver bestehen.

7. Anordnung nach einem der vorhergehenden Ansprüche, **dadurch gekennzeichnet, daß** die Schalenkerne (3, 4) aus kunststoffgebundenem Ferritpulver bestehen.

8. Anordnung nach einem der vorhergehenden Ansprüche, **dadurch gekennzeichnet, daß** die Schalenkerne (3, 4) aus kunststoffgebundenem Nickel-Eisen-Pulver bestehen.

## Claims

1. Arrangement for the contactless transfer of signals between two vehicle parts mounted so as to rotate with respect to one other - preferably between a steering wheel equipped with an airbag and a control circuit arranged on the chassis - which arrangement is composed of a transformer whose primary winding (1) and secondary winding (2) are located in separate annular pot-type cores (3, 4) which can rotate with respect to one another about the axis of rotation (5) of the vehicle parts, and one (3) of which has a U-shaped cross section, **characterized in that** the second pot-type core (4) also has a U-shaped cross section, and **in that** the said second pot-type core (4) projects into the first U-shaped pot-type core (3), with the result that the magnetic flux (8) intersects, preferably in a radial direction with respect to the axis of rotation (5), the air gaps (6, 7, 6', 7') remaining between the two pot-type cores (3, 4).

2. Arrangement according to Claim 1, **characterized in that** the internal contour of the U-shaped pot-type core (3) and the external contour of the pot-type core (4) projecting into it are shaped in such a way that the air gaps (6, 7) present between the two pot-type cores (3, 4) are oriented axially parallel to one another.

3. Arrangement according to Claim 1, **characterized in that** the internal contour of the U-shaped pot-type core (3) and the external contour of the pot-type core (4) projecting into it are shaped conically, with the result that the air gaps (6', 7') which are present between the two pot-type cores (3, 4) are inclined with respect to one another in the direction of the opening of the U-shaped pot-type core (3).

4. Arrangement according to Claim 1, **characterized in that** at places where eddy currents occur, one or two pot-type cores (3, 4) are provided with indents which extend in such a way that they lengthen the current paths.

5. Arrangement according to Claim 1, **characterized in that**, in areas through which eddy currents flow, one or both pot-type cores (3, 4) are composed of segments which are electrically insulated from one another.

6. Arrangement according to one of the preceding claims, **characterized in that** the pot-type cores (3, 4) are composed of plastic-bound iron powder.

7. Arrangement according to one of the preceding claims, **characterized in that** the pot-type cores (3, 4) are composed of plastic-bound ferrite powder.

8. Arrangement according to one of the preceding claims, **characterized in that** the pot-type cores (3, 4) are composed of plastic-bound nickel/iron powder.

## Revendications

1. Dispositif de transmission sans contact de signaux entre deux parties de véhicule tournant l'une par rapport à l'autre, de préférence entre un volant équipé d'un coussin gonflable et d'un circuit de commande porté par le châssis, comportant un transmetteur dont l'enroulement primaire (1) et l'enroulement secondaire (2) sont logés dans des noyaux en forme de coquilles annulaires (3, 4) séparées tournant l'une par rapport à l'autre autour de l'axe de rotation (5) des parties du véhicule, dont l'un (3) des noyaux présente une section en forme de U,
**caractérise en ce que** même le second noyau en forme de coquille (4) a une section en forme de U et ce second noyau (4) en forme de U pénètre dans le premier noyau (3) pour que le flux magnétique (8) coupe l'entrefer (6, 7, 6', 7') restant entre les deux parties de noyaux en coquille (3, 4), de préférence dans la direction radiale par rapport à l'axe de rotation (5).

2. Dispositif selon la revendication 1,
**caractérisé en ce que** le contour intérieur du noyau en coquille (3) en forme de P et le contour extérieur du noyau en coquille (a) qui vient dans le précédent sont formés pour que l'entrefer (5, 7) qui subsiste entre les deux noyaux en coquille (3, 4) soient d'axes parallèles aux axes des coquilles.

3. Dispositif selon la revendication 1,
**caractérisé en ce que** se contour intérieur du noyau en coquille (3) en forme de U et le contour extérieur du noyau en coquille (4) logé dans le précédent sont de forme conique pour que l'entrefer (5', 7') subsistant entre les deux noyaux en coquille (3, 4) soient inclinés en direction de l'ouverture du noyau en forme de coquille (3).

4. Dispositif selon la revendication 1,
**caractérisé en ce que** l'un ou les deux noyaux en forme de coquille (3, 4) comportent des encoches là ou se produisent des courants de Foucault et ces encoches sont tracées pour allonger le chemin du courant électrique.

5. Dispositif selon la revendication 1,
**caractérisé en ce que** l'un ou les deux noyaux en forme de coquille (3, 4) sont formés de segments dans les zones traversées par les courants de Foucault qui sont isolées électriquement.

6. Dispositif selon l'une des revendications précédentes,
**caractérisé en ce que** les noyaux de coquille (3, 4) sont formés de poudres de fer liées à la matière plastique.

7. Dispositif selon l'une des revendications précédentes,
**caractérisé en ce que** les noyaux de coquille (3, 4) sont en poudres de Ferrite par de la matière plastique.

8. Dispositif selon l'une des revendications précédentes,
**caractérisé en ce que** les noyaux de coquille (3, 4) sont en poudre nickel/fer liée avec de la matière plastique.
